# EUROPEAN PATENT SPECIFICATION

(11) **EP 3 022 538 B1**
(45) Date of publication and mention of the grant of the patent: **09.09.2020**
(21) Application number: 14776718.0
(22) Date of filing: 17.07.2014
(51) Int. Cl.: G01K 1/02

(54) **A METHOD OF TEMPERATURE MEASUREMENT AND RECORDING AS A FUNCTION OF TIME**
TEMPERATURMESSVERFAHREN UND -AUFZEICHNUNG ALS ZEITFUNKTION
PROCÉDÉ DE MESURE ET D'ENREGISTREMENT DE TEMPÉRATURE EN FONCTION DU TEMPS

(30) Priority: 18.07.2013 PL 40474613
(43) Date of publication of application: 25.05.2016
(73) Proprietor: A4P Technologies S.A., 2086 Luxembourg (LU)
(72) Inventor: BIGAJ, Zbigniew, PL-60-101 Poznan (PL); FRACKOWIAK, Roman, PL-61-245 Poznan (PL); JEZIERSKI, Juliusz, PL-61-292 Pozna (PL); DZIEL, Dariusz, PL-60-446 Poznan (PL)
(74) Representative: Office Freylinger
(86) International application number: PCT/IB2014/001860
(87) International publication number: WO 2015/008148

(56) References cited:
- EP-A2- 2 390 638
- CN-B- 102 176 112
- US-A1- 2010 042 013
- US-A1- 2010 295 623

## Description

The subject of the invention is a method of temperature measurement and recording as a function of time.

From the description of US2006145840, are known the following: a device and a method of obtaining, gathering and storage of temperature and/or pressure and/or humidity measurement values. In the method, at least one sensor is used to obtain the measurement values. The device contains means for storage of the measurement values.

US 2010/042013 A1 relates to a time-temperature recorder which transmits stored data via a bluetooth link.

EP 2 390 638 A2 discloses a thermistor whose output signal is amplified and shifted into the operating range of an analogue-to-digital converter in order to increase its dynamic range.

US 2010/295623 A1 and CN 102 176 112 B relate to the calibration of the temperature dependence of crystal oscillators.

Sensors as well as other elements are intended to be placed inside a closed process chamber. Moreover, the device contains means for wireless transfer of stored measurement values in constant time intervals, or means for placing them on a receiving unit located outside of the closed process chamber. In the temperature and/or pressure and/or humidity monitoring process, obtaining measurement values is accomplished with the help of at least one sensor, which is placed inside the closed process chamber. The obtained measurement values are stored and compiled in at least one data logger, and in the process they are being sent in constant time intervals or sent to the receiving unit located outside the process chamber, with the help of a wireless system.

The aim of the invention is to provide a measurement method and a record of temperatures as a function of time, which allows to obtain a temperature measurement accuracy on a level higher than 0,2 °C in the whole measurement range from at least -10 °C to +25 °C, while maintaining the time measurement accuracy in a range of less than 1 minute in a time interval not smaller than a month. The measurement method and temperature record as a function of time according to the invention uses an electrically powered circuit, comprising a temperature sensor, which is a thermistor circuit, an at least 8-bit microprocessor connected with a memory i.e. a RAM memory and/or a Flash and /or a EEPROM, a Real-Time Clock and a plurality of resistors, each with its corresponding switch, in which a temperature measurement is performed by means of the temperature sensor, the measurement is stored in the microprocessor, which helps to pair data concerning the real time of a particular measurement with the data of a corresponding temperature measurement, and the obtained results are saved in the memory. The method is characterized in that the whole range of measured temperatures, falling within the range from at least -10°C to +25°C, is divided into measurement segments, where each segment is paired with an individual resistor with its corresponding switch, wherein all individual resistors with their corresponding switches are connected to the thermistor circuit, which is connected with the at least an 8-bit microprocessor. Furthermore, the microprocessor is connected with an internal Real-Time Clock equipped with a crystal oscillator. Time or time intervals are determined using the Real-Time Clock. Additionally, the Real-Time Clock is used to determine an exact Coordinated Universal Time UTC time in a format containing at least the date and beginning hour of the data recording + n times a time interval, and the date of the end time of the data recording. In the temperature and time reference model, the thermistor and the real time clock are calibrated simultaneously with the use of a reference temperature and time standard, and the data from the calibrations are saved in the memory, wherein the thermistor with the electrically powered circuit is placed in a location where the measurement takes place. Then, the signal representing an instantaneous value of voltage drop across the thermistor is sent to the microprocessor, which helps to convert the instantaneous value of voltage drop across the thermistor into a corresponding instantaneous temperature value. With the help of said microprocessor, sampling is performed, and based on the sampling, the previously measured temperature instantaneous value is assigned to an individual resistor with its corresponding switch. During the actual measurement using the microprocessor, all the connections of the individual resistors with their corresponding switches are disconnected and the microprocessor connects again the individual resistor with its corresponding switch which was earlier assigned to a measurement segment responsible for the currently measured instantaneous value of temperature. By using the whole converter resolution of the at least 8-bit microprocessor, the instantaneous temperature value is measured in this measurement segment. According to another beneficial feature of the invention, the number of measurement intervals is selected depending on the desired temperature measurement precision. According to another beneficial feature of the invention transistors are used as switches. According to another beneficial feature of the invention, a radio transmitter is linked to the microprocessors' circuit. According to the next beneficial feature of the invention, the radio transmitter is powered from a separate battery of ceramic capacitors, powered by the power source of the electrically powered circuit. According to another beneficial feature of the invention, data packets are sent periodically with the help of the radio transmitter. Each packet contains data about the temperature and time of a last measurement and data about temperatures and times of at least 2 measurements directly preceding the last measurement. The beneficial effects of using the invention are the possibility of keeping measurement and temperature records as a function of time , which give the possibility to obtain a measurement precision of the temperature at the level higher than 0,2 °C in the whole measurement range, which is in the range from at least -10 °C to +25 °C.

### Example 1

In one of multiple possible preferred embodiments of the method of temperature measurement and recording as a function of time, according to the invention, the method is performed using an electrically powered circuit. The circuit comprises a temperature sensor which is a thermistor T circuit, a 12-bit microprocessor M connected with a RAM memory P, a Real-Time Clock C, and a plurality of resistors R, each with its corresponding switch S.

The total range of measured temperatures, within a -40°C to 85°C interval, is divided into 4 measurement segments, where each segment is paired with an individual resistor R with its corresponding switch S in which a transistor is used as the switch S. The division of the temperature range into measurement segments is executed in such a way that the segments overlap in their end parts. All individual resistors with their corresponding switches are connected to the thermistor T circuit which is connected to the 12-bit microprocessor M. Microprocessor M connects with an internal Real-Time Clock C having a crystal oscillator, which is used to report time. Additionally, the Real-Time Clock C is used to determine the Coordinated Universal Time UTC in the format: the date and time of the beginning of data recording + n times a time interval and the date of the end time of data recording. Microprocessor M is connected with the RAM memory P. The thermistor T and the Real-time Clock C are simultaneously calibrated with the use of reference temperature and time standard, and the calibration data are recorded in the memory P. A reference liquid temperature source for at least 3 different temperature values is used as the temperature reference standard. The thermistor T together with the electrically powered circuit is placed at the measurement location. The signal representing the instantaneous value of the voltage drop across the thermistor T is directed to the microprocessor M where the instantaneous value of voltage drop across the thermistor T is converted to a corresponding instantaneous value of temperature. Sampling is performed by means of the microprocessor M where, based on a comparison, previously recorded instantaneous value of temperature is assigned to an individual resistor with its corresponding switch. During the actual measurement, microprocessor M is disconnected from all resistors with their corresponding switches and connects again the resistor with its corresponding switch which was earlier assigned to the measurement segment responsible for the currently measured instantaneous value of temperature, and using the total converter resolution of the microprocessor M, the instantaneous value of temperature in a given measurement segment is measured. A radio transmitter RT is connected to the microprocessor M circuit. The radio transmitter RT is powered by a separate multilayer ceramic chip capacitor powered from a circuit power source CPS. By means of the radio transmitter RT, data packets are sent periodically, and each packet carries temperature and time data of a last measurement as well as the temperatures and time data of 5 measurements directly preceding the last measurement. An infrared link IR through which the data stored in the memory P are read, is connected to microprocessor M.

### Example 2

In one of multiple possible preferred embodiments of the electrically powered circuit dedicated to temperature measurement and recording as a function of time, according to the invention, the electrically powered circuit comprises a temperature sensor in the form of a thermistor T with a measured temperature range from at least -40°C to 85°C, a 12-bit microprocessor M with an external and internal RAM memory P, and an internal Real-Time Clock C with a crystal oscillator. The total range of measured temperatures is divided into measurement segments, where each segment is paired with an individual resistor with its corresponding switch S, whereas all individual resistors with their corresponding switches are connected to the thermistor T circuit, which is connected with the 12-bit microprocessor M. The Real-Time Clock C reports time or time intervals as well as determines precise Coordinated Universal Time UTC in a format comprising at least the date and the time of the beginning of data recording + plus n times the time interval, and the date of the end time of data recording, and then the microprocessor M is connected to the external RAM memory P. The range of measured temperatures is divided into measurement segments and has an overlap of measurement segments in their end parts. Transistors are used as switches S. Microprocessor M circuit has a connection with a radio transmitter RT. Radio transmitter RT is connected to a separate multilayer ceramic chip capacitor powered by the electrically powered circuit power source. An infrared link IR is connected to microprocessor M circuit. The operation of the electrically powered circuit according to the present preferred embodiment has been explicated by the preferred embodiment of method, according to the invention, to which inter alia the electrically powered circuit is dedicated.

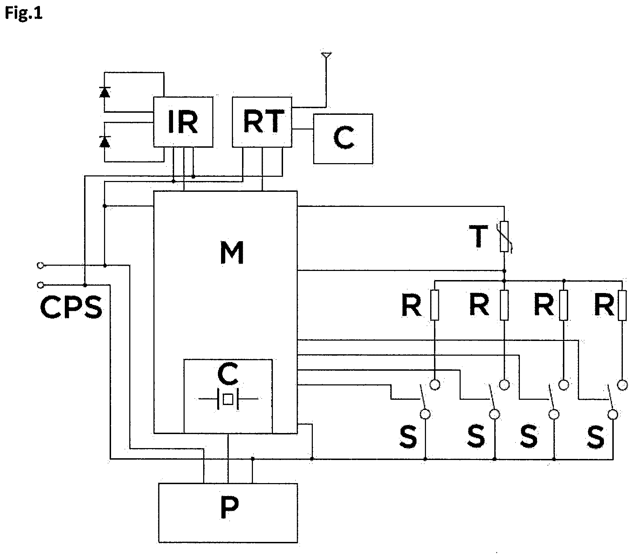

## Claims

1. A method of temperature measurement and recording as a function of time, using an electrically powered circuit, the circuit comprising a temperature sensor, which is a thermistor (T) circuit, an at least 8-bit microprocessor (M) connected with a memory (P) i.e. a RAM memory and/or a Flash and /or a EEPROM, a Real-time clock (C) and a plurality of resistors (R), each with its corresponding switch (S), in which a temperature measurement is performed by means of the temperature sensor, the measurement is stored in the microprocessor (M), the temperature measurements are paired with the real time of a particular measurement, the obtained results are stored in the memory (P), wherein the total range of measured temperatures, within a -10°C to +25°C interval, is divided into measurement segments, where each segment is paired with an individual resistor (R) with its corresponding switch (S), wherein all individual resistors (R) with their corresponding switches (S) are connected to the thermistor (T) circuit which is connected with the microprocessor (M), and said microprocessor (M) is connected with the internal Real-Time Clock (C) having a crystal oscillator, wherein said Real-Time Clock (C) is used to determine Coordinated Universal Time UTC in a format comprising at least the date and the time of the data recording beginning +n times a time interval, and the date of the end time of the data recording, and wherein said thermistor (T) and said Real-time Clock (C) are calibrated simultaneously with the use of a reference temperature and time standard, and the calibration data are recorded in the memory (P), said thermistor (T) together with the circuit is placed at the measurement location, and the signal representing an instantaneous value of voltage drop across said thermistor (T) is directed to said microprocessor (M), where said instantaneous value of the voltage drop across said thermistor (T) is converted to a corresponding instantaneous temperature value, sampling is performed by means of said microprocessor (M) where, based on a comparison, previously recorded instantaneous value of temperature is assigned to an individual resistor (R) with its corresponding switch (S), and, during the measurement, said microprocessor (M) disconnects all connections from said individual resistors (R) with their corresponding switches (S) and connects again the resistor (R) with its corresponding switch (S), which was earlier assigned to a measurement segment responsible for the currently measured instantaneous value of temperature, and wherein, using the total converter resolution of said at least 8-bit microprocessor (M), said instantaneous value of temperature in said measurement segment is measured.

2. The method of temperature measurement and recording as a function of time according to claim 1, **characterized in that** the number of said measurement segments depends on the desired precision of temperature measurement.

3. The method of temperature measurement and recording as a function of time according to claim 1, **characterized in that** a radio transmitter (RT) is connected to said microprocessor (M) circuit.

4. The method of temperature measurement and recording as a function of time according to claim 3, **characterized in that** said radio transmitter (RT) is powered by a separate multilayer ceramic chip capacitor powered by a integrated circuit power source (CPS).

5. The method of temperature measurement and recording as a function of time according to any one of claims 3 or 4, **characterized in that** by means of said radio transmitter (RT) data packets are sent periodically, each of which carrying temperature and time of a last measurement as well as the temperature and time data of at least 2 measurements directly preceding the last measurement.

## Patentansprüche

1. Verfahren zur Temperaturmessung und -aufzeichnung als eine Funktion der Zeit unter Verwendung einer elektrisch betriebenen Schaltung, wobei die Schaltung umfasst: einen Temperatursensor, der eine Thermistor (T)-Schaltung ist, einen mindestens 8-Bit-Mikroprozessor (M), der mit einem Speicher (P), das heißt einem RAM-Speicher und/oder einem Flash-Speicher und/oder einem EEPROM-Speicher, verbunden ist, eine Echtzeituhr (C), und mehrere Widerstände (R), jeder mit seinem entsprechenden Schalter (S), wobei eine Temperaturmessung mit Hilfe des Temperatursensors durchgeführt wird, wobei die Messung in dem Mikroprozessor (M) gespeichert wird, wobei die Temperaturmessungen mit der Echtzeit einer bestimmten Messung gepaart werden, und wobei die erhaltenen Ergebnisse in dem Speicher (P) gespeichert werden,
wobei der Gesamtbereich der gemessenen Temperaturen innerhalb eines Intervalls von -10°C bis +25 °C in Messsegmente unterteilt ist, wobei jedes Segment mit einem individuellen Widerstand (R) mit seinem entsprechenden Schalter (S) gepaart ist,
wobei alle individuellen Widerstände (R) mit ihren entsprechenden Schaltern (S) mit der Thermistor (T)-Schaltung verbunden sind, die mit dem Mikroprozessor (M) verbunden ist, und der Mikroprozessor (M) mit der internen Echtzeituhr (C), die einen Quarzoszillator aufweist, verbunden ist,
wobei die Echtzeituhr (C) verwendet wird, um die koordinierte Weltzeit (*Coordinated Universal Time*, UTC) in einem Format zu bestimmen, das mindestens das Datum und die Zeit des Datenaufzeichnungsbeginns + n mal ein Zeitintervall und das Datum der Endzeit der Datenaufzeichnung umfasst, und
wobei der Thermistor (T) und die Echtzeituhr (C) gleichzeitig unter Verwendung eines Referenztemperatur- und -zeitstandards kalibriert werden, und die Kalibrierungsdaten in dem Speicher (P) aufgezeichnet werden, wobei der Thermistor (T) zusammen mit der Schaltung an der Messstelle angeordnet wird, und das Signal, das einen augenblicklichen Wert des Spannungsabfalls an dem Thermistor (T) darstellt, an den Mikroprozessor (M) übermittelt wird, wo der augenblickliche Wert des Spannungsabfalls an dem Thermistor (T) in einen entsprechenden augenblicklichen Temperaturwert umgewandelt wird, wobei eine Abtastung mittels des Mikroprozessors (M) durchgeführt wird, wobei auf der Grundlage eines Vergleichs ein zuvor aufgezeichneter augenblicklicher Temperaturwert einem individuellen Widerstand (R) mit seinem entsprechenden Schalter (S) zugewiesen wird, und wobei der Mikroprozessor (M) während der Messung alle Verbindungen von den individuellen Widerständen (R) mit ihren entsprechenden Schaltern (S) trennt und den Widerstand (R) wieder mit seinem entsprechenden Schalter (S) verbindet, der zuvor einem Messsegment zugeordnet war, das für den aktuell gemessenen augenblicklichen Temperaturwert verantwortlich ist, und
wobei unter Verwendung der gesamten Wandlerauflösung des mindestens 8-Bit-Mikroprozessors (M) der augenblickliche Wert der Temperatur in dem Messsegment gemessen wird.

2. Verfahren zur Temperaturmessung und -aufzeichnung als eine Funktion der Zeit nach Anspruch 1, **dadurch gekennzeichnet, dass** die Anzahl der Messsegmente von der gewünschten Präzision der Temperaturmessung abhängt.

3. Verfahren zur Temperaturmessung und -aufzeichnung als eine Funktion der Zeit nach Anspruch 1, **dadurch gekennzeichnet, dass** ein Funksender (*Radio Transmitter*, RT) mit der Mikroprozessor (M)-Schaltung verbunden ist.

4. Verfahren zur Temperaturmessung und -aufzeichnung als eine Funktion der Zeit nach Anspruch 3, **dadurch gekennzeichnet, dass** der Funksender (RT) durch einen separaten Mehrschicht-Keramikchipkondensator gespeist wird, der durch einen integrierten Stromquellenschaltkreis (*Circuit Power Source*, CPS) gespeist wird.

5. Verfahren zur Temperaturmessung und -aufzeichnung als eine Funktion der Zeit nach einem der Ansprüche 3 und 4, **dadurch gekennzeichnet, dass** mit Hilfe des Funksenders (RT) periodisch Datenpakete gesendet werden, von denen jedes die Temperatur und die Zeit einer letzten Messung sowie die Temperatur- und Zeitdaten von mindestens 2 Messungen, die der letzten Messung unmittelbar vorausgingen, transportiert.

## Revendications

1. Procédé de mesure et d'enregistrement de température en fonction du temps, à l'aide d'un circuit à alimentation électrique, le circuit comprenant un capteur de température, qui est un circuit de thermistance (T), au moins un microprocesseur (M) de 8 bits connecté à une mémoire (P), c'est-à-dire une mémoire RAM et/ou une mémoire Flash et/ou une mémoire EEPROM, une horloge en temps réel (C) et une pluralité de résistances (R), chacune avec son commutateur correspondant (S), dans lequel une mesure de température est exécutée au moyen du capteur de température, la mesure est stockée dans le microprocesseur (M), les mesures de température sont appariées en temps réel à une mesure particulière, les résultats obtenus sont stockés dans la mémoire (P), dans lequel la plage totale des températures mesurées, dans un intervalle allant de -10 °C à +25 °C, est divisée en segments de mesure, où chaque segment est apparié à une résistance individuelle (R) avec son commutateur correspondant (S), dans lequel toutes les résistances individuelles (R) avec leurs commutateurs correspondants (S) sont connectées au circuit de thermistance (T) qui est connecté au microprocesseur (M), et ledit microprocesseur (M) est connecté à l'horloge interne en temps réel (C) ayant un oscillateur à cristal, dans lequel ladite horloge en temps réel (C) est utilisée pour déterminer un temps universel coordonné UTC dans un format comprenant au moins la date et l'heure du début de l'enregistrement des données à +n fois d'un intervalle temporel, et la date de l'heure de fin de l'enregistrement des données, et dans lequel ladite thermistance (T) et ladite horloge en temps réel (C) sont étalonnées simultanément à l'aide d'une température de référence et d'une norme de temps, et les données d'étalonnage sont enregistrées dans la mémoire (P), ladite thermistance (T) conjointement avec le circuit est placée au niveau de l'emplacement de la mesure, et le signal représentant une valeur instantanée de la baisse de tension à travers ladite thermistance (T) est dirigé vers ledit microprocesseur (M), où ladite valeur instantanée de la baisse de tension à travers ladite thermistance (T) est convertie en une valeur de température instantanée correspondante, un échantillonnage est exécuté au moyen dudit microprocesseur (M) où, sur la base d'une comparaison, une valeur de température instantanée enregistrée précédemment est attribuée à une résistance individuelle (R) avec son commutateur correspondant (S), et pendant la mesure, ledit microprocesseur (M) déconnecte toutes les connexions desdites résistances individuelles (R) avec leurs commutateurs correspondants (S) et connecte de nouveau la résistance (R) avec son commutateur correspondant (S), qui a été auparavant attribué à un segment de mesure responsable de la valeur de température instantanée actuellement mesurée, et dans lequel, à l'aide de la résolution totale de convertisseur dudit au moins un microprocesseur (M) de 8 bits, ladite valeur de température instantanée dans ledit segment mesuré est mesurée.

2. Procédé de mesure et d'enregistrement de température en fonction du temps selon la revendication 1, **caractérisé en ce que** le nombre desdits segments mesurés dépend de la précision souhaitée de la mesure de température.

3. Procédé de mesure et d'enregistrement de température en fonction du temps selon la revendication 1, **caractérisé en ce qu'**un émetteur radio (RT) est connecté audit circuit de microprocesseur (M).

4. Procédé de mesure et d'enregistrement de température en fonction du temps selon la revendication 3, **caractérisé en ce que** ledit émetteur radio (RT) est alimenté par un condensateur à puce céramique multicouche séparé alimenté par une source de puissance de circuit intégré (CPS).

5. Procédé de mesure et d'enregistrement de température en fonction du temps selon l'une quelconque des revendications 3 ou 4, **caractérisé en ce qu'**au moyen dudit émetteur radio (RT), des paquets de données sont envoyés périodiquement, chacun d'eux acheminant la température et le temps d'une dernière mesure ainsi que les données de température et de temps d'au moins deux mesures précédant directement la dernière mesure.
